(19) Europäisches Patentamt
European Patent Office
Office européen des brevets

(11) EP 2 881 434 A1

(12) # EUROPEAN PATENT APPLICATION
published in accordance with Art. 153(4) EPC

(43) Date of publication:
**10.06.2015 Bulletin 2015/24**

(21) Application number: **13826102.9**

(22) Date of filing: **31.07.2013**

(51) Int Cl.:
***C08L 67/02*** *(2006.01)* ***C08K 5/49*** *(2006.01)*
***C08L 63/00*** *(2006.01)*

(86) International application number:
**PCT/JP2013/070827**

(87) International publication number:
**WO 2014/021409 (06.02.2014 Gazette 2014/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.08.2012 JP 2012170980**

(71) Applicant: **Wintech Polymer Ltd.**
**Minato-ku**
**Tokyo 108-8280 (JP)**

(72) Inventors:
- **GOSHIMA, Kazuya**
  **Fuji-shi**
  **Shizuoka 416-8533 (JP)**
- **HIRAKAWA, Takakazu**
  **Fuji-shi**
  **Shizuoka 416-8533 (JP)**

(74) Representative: **Maiwald Patentanwalts GmbH**
**Elisenhof**
**Elisenstrasse 3**
**80335 München (DE)**

(54) ## CASING FOR ELECTRONIC EQUIPMENT

(57) Provided is a casing for electronic equipment providing both impact resistance and flame retardance and further providing excellent low warpage. The casing for electronic equipment is constructed from a polybutylene terephthalate resin composition containing a polybutylene terephthalate resin (A), a modified polyethylene terephthalate resin (B), a halogen-free flame retardant (C), and an epoxy group-containing ethylene copolymer (D); the Charpy impact value measured in accordance with ISO-179 in this polybutylene terephthalate resin composition is 10 kJ/$m^2$ or higher; and this polybutylene terephthalate resin composition produces a casing for electronic equipment that meets the 5VA standard in a thickness of 2 mm by a test method that accords with the UL 94 standard.

EP 2 881 434 A1

## Description

TECHNICAL FIELD

The present invention relates to a casing for electronic equipment.

BACKGROUND ART

Polybutylene terephthalate resins have been used as engineering plastics in wide uses including electronic equipment components, automobile components, and the like because of excellent various properties such as mechanical properties, electrical properties, and chemical properties, and satisfactory processability.

There is a need particularly for the casing among the electronic equipment components to be provided with both impact resistance and flame retardance, and to be provided with excellent low warpage so as to accommodate other components and to bond a case with a lid.

There is disclosed, as a polybutylene terephthalate resin composition usable in the electronic equipment components, a composition prepared by mixing a polybutylene terephthalate resin with a modified polyester and a phosphinate (Patent Document 1). However, it is difficult for this technology to satisfy both flame retardance and impact resistance in the obtained molded article, and to obtain satisfactory low warpage required for components such as a casing.

Patent Document 1: Japanese Unexamined Patent Application, Publication No. 2007-91865

DISCLOSURE OF THE INVENTION

Problems to be Solved by the Invention

An object of the present invention is to provide a casing for electronic equipment, which is provided with both impact resistance and flame retardance, and is also provided with excellent low warpage.

Means for Solving the Problems

The present inventors have found that the above problems can be solved by mixing a polybutylene terephthalate resin (A) with a modified polyethylene terephthalate resin (B), a halogen-free flame retardant (C), and an epoxy group-containing ethylene copolymer (D), thus completing the present invention. More specifically, the present invention provides the followings.

(1) A casing for electronic equipment, composed of a polybutylene terephthalate resin composition including:

a polybutylene terephthalate resin (A),
a modified polyethylene terephthalate resin (B),
a halogen-free flame retardant (C), and
an epoxy group-containing ethylene copolymer (D),
Wherein
the Charpy impact value measured in accordance with ISO-179 in the polybutylene terephthalate resin composition is 10 $kJ/m^2$ or more, and
the polybutylene terephthalate resin composition complies with 5VA standard at a thickness of 2 mm in a test method in accordance with the UL 94 standard.

(2) The casing for electronic equipment according to (1), wherein, when the total amount of the polybutylene terephthalate resin (A) and the modified polyethylene terephthalate resin (B) is 100% by mass, the polybutylene terephthalate resin (A) satisfies the amount within a range of more than 50% by mass and less than or equal to 70% by mass, and the modified polyethylene terephthalate resin (B) satisfies the amount within a range of more than or equal to 30% by mass and less than 50% by mass.

(3) The casing for electronic equipment according to (1) or (2), wherein the value of the below-mentioned formula (I) represented by parts by mass of the modified polyethylene terephthalate resin (B), the halogen-free flame retardant (C), and the epoxy group-containing ethylene copolymer (D) based on 100 parts by mass of the polybutylene terephthalate resin (A) is within a range of 2/8 or more and 3/7 or less.

$$(C)/((A) + (B) + (D)) \quad \cdots (I)$$

(4) The casing for electronic equipment according to any one of (1) to (3), wherein the value of the below-mentioned formula (II) represented by parts by mass of the modified polyethylene terephthalate resin (B) and the epoxy group-containing ethylene copolymer (D) based on 100 parts by mass of the polybutylene terephthalate resin (A) is within a range of 1/9 or more and 3/7 or less.

$$(D)/((A)+(B)) \quad \cdots (II)$$

(5) The casing for electronic equipment according to any one of (1) to (4), wherein the value of the below-mentioned formula (III) represented by parts by mass of the modified polyethylene terephthalate resin (B), the halogen-free flame retardant (C), and the epoxy group-containing ethylene copolymer (D) based on 100 parts by mass of the polybutylene terephthalate resin (A) is within a range of 0.8 or more and 1.0 or less.

$$(((A) + (B) + (D))/(C)) \times ((D)/((A) + (B))) \quad \cdots (III)$$

(6) The casing for electronic equipment according to any one of (1) to (5), which is a casing accommodating components of any electronic equipment of the group consisting of office automation equipment, electrical home appliances, or electric vehicles.
(7) The casing for electronic equipment according to (6), wherein components of the electronic equipment are power supply components.

Effects of the Invention

According to the present invention, there is provided a casing for electronic equipment, which is provided with both impact resistance and flame retardance, and is also provided with excellent low warpage.

BRIEF DESCRIPTION OF THE DRAWINGS

Fig. 1 is a diagram showing a specimen made of a polybutylene terephthalate resin composition of the present invention used to measure flatness.

PREFERRED MODE FOR CARRYING OUT THE INVENTION

An embodiment of the present invention will be described in detail below, but the present invention is not limited to the following embodiment and variations can be appropriately made without departing from the objects of the present invention.

Polybutylene Terephthalate Resin Composition

The casing for electronic equipment of the present invention is composed of a polybutylene terephthalate resin composition containing a polybutylene terephthalate resin (A), a modified polyethylene terephthalate resin (B), a halogen-free flame retardant (C), and a thermoplastic polyester elastomer (D), and has prescribed properties. The respective components and the like will be described below.

[Polybutylene Terephthalate Resin (A)]

The polybutylene terephthalate resin (A) used in the present invention is a polybutylene terephthalate-based resin obtained by polycondensing a dicarboxylic acid component containing at least terephthalic acid or an ester-forming derivative thereof ($C_{1-6}$ alkyl ester, acid halide, etc.) with a glycol component containing at least an alkylene glycol having 4 carbon atoms (1,4-butanediol) or an ester-forming derivative thereof (acetylated compound, etc.). The polybutylene terephthalate resin is not limited to a homo-polybutylene terephthalate resin, and also may be a copolymer including 90 mol% or more of a butylene terephthalate unit.
In the polybutylene terephthalate resin (A) used in the present invention, examples of the dicarboxylic acid

component other than terephthalic acid and an ester-forming derivative thereof (comonomer component) include a $C_{8-14}$ aromatic dicarboxylic acid such as isophthalic acid, phthalic acid, 2,6-naphthalenedicarboxylic acid, or 4,4'-dicarboxydiphenylether; a $C_{4-16}$ alkanedicarboxylic acid such as succinic acid, adipic acid, azelaic acid, or sebacic acid; a $C_{5-10}$ cycloalkanedicarboxylic acid such as cyclohexanedicarboxylic acid; or an ester-forming derivative of these dicarboxylic acid components ($C_{1-6}$ alkyl ester derivative, acid halide, etc.). These dicarboxylic acid components can be used alone, or two or more of them can be used in combination.

Of these dicarboxylic acid components, a $C_{8-12}$ aromatic dicarboxylic acid such as isophthalic acid, and a $C_{6-12}$ alkanedicarboxylic acid such as adipic acid, azelaic acid, or sebacic acid are more preferable.

In the polybutylene terephthalate resin used in the present invention, examples of the glycol component other than 1,4-butanediol (comonomer component) include a $C_{2-10}$ alkylene glycol such as ethylene glycol, propylene glycol, trimethylene glycol, 1,3-butylene glycol, hexamethylene glycol, neopentyl glycol, or 1,3-octanediol; a polyoxyalkylene glycol such as diethylene glycol, triethylene glycol, or dipropylene glycol; an alicyclic diol such as cyclohexanedimethanol or hydrogenated bisphenol A; an aromatic diol such as bisphenol A or 4,4'-dihydroxybiphenyl; a $C_{2-4}$ alkylene oxide adduct of bisphenol A, such as a 2 mol ethylene oxide adduct of bisphenol A or a 3 mol propylene oxide adduct of bisphenol A; or an ester-forming derivative of these glycols (acetylated compound, etc.). These glycol components can be used alone, or two or more of them can be used in combination.

Of these glycol components, a $C_{2-6}$ alkylene glycol such as ethylene glycol or trimethylene glycol, a polyoxyalkylene glycol such as diethylene glycol, or an alicyclic diol such as cyclohexanedimethanol are more preferable.

Examples of the comonomer component used in the present invention other than the dicarboxylic acid component and the glycol component include an aromatic hydroxycarboxylic acid such as 4-hydroxybenzoic acid, 3-hydroxybenzoic acid, 6-hydroxy-2-naphthoic acid, or 4-carboxy-4'-hydroxybiphenyl; an aliphatic hydroxycarboxylic acid such as glycolic acid or hydroxycaproic acid; a $C_{3-12}$ lactone such as propiolactone, butyrolactone, valerolactone, or caprolactone ($\varepsilon$-caprolactone, etc.); or an ester-forming derivative of these comonomer components ($C_{1-6}$ alkyl ester derivative, acid halide, acetylated compound, etc.).

It is possible to suitably use, as the polybutylene terephthalate resin (A), all polybutylene terephthalate copolymers obtained by copolymerizing the above-described comonomer component. It is also possible to use, as the polybutylene terephthalate resin (A), a homo-polybutylene terephthalate polymer in combination with a polybutylene terephthalate copolymer so that the amount of the butylene terephthalate unit in the obtained polybutylene terephthalate resin (A) is 90 mol% or more.

There is no particular limitation on the amount of a terminal carboxyl group of the polybutylene terephthalate resin (A) used in the present invention, as long as the objects of the present invention are not impaired. The amount of the terminal carboxyl group of the polybutylene terephthalate resin used in the present invention is preferably 30 meq/kg or less, and more preferably 25 meq/kg or less. When using the polybutylene terephthalate resin having a terminal carboxyl group in the amount within the above range, the obtained polybutylene terephthalate resin composition is less likely to undergo a decrease in strength due to hydrolysis in a moist heat environment.

The lower limit of the amount of the terminal carboxyl group of the polybutylene terephthalate resin (A) is not particularly limited and is preferably 10 meq/kg or more, and more preferably 5 meq/kg or more. Usually, it is difficult to produce a polybutylene terephthalate resin having a terminal carboxyl group in the amount of less than 5 meq/kg.

There is no particular limitation on an inherent viscosity of the polybutylene terephthalate resin (A) used in the present invention, as long as the objects of the present invention are not impaired. The inherent viscosity (IV) of the polybutylene terephthalate resin (A) is preferably 0.60 dL/g or more and 1.2 dL/g or less so that the obtained polybutylene terephthalate resin composition is particularly excellent in moldability. More preferably, the inherent viscosity is 0.65 dL/g or more and 0.9 dL/g or less. It is also possible to adjust the inherent viscosity by blending a polybutylene terephthalate resin having a different inherent viscosity. For example, it is possible to prepare a polybutylene terephthalate resin having an inherent viscosity of 0.9 dL/g by blending a polybutylene terephthalate resin having an inherent viscosity of 1.0 dL/g with a polybutylene terephthalate resin having an inherent viscosity of 0.7 dL/g. The inherent viscosity (IV) of the polybutylene terephthalate resin (A) can be measured, for example, in an o-chlorophenol under the conditions of a temperature of 35°C.

[Modified Polyethylene Terephthalate Resin (B)]

There have conventionally been used, as an opposite material for alloying, which is excellent in compatibility with the polybutylene terephthalate resin (A), a polyethylene terephthalate resin containing no modifying component, a modified polybutylene terephthalate resin containing 10 mol% or more of a modifying component, and the like. However, in the present invention, it is possible to obtain an electronic equipment casing, which is particularly excellent in fluidity, warpage, and flame retardance, by using a polybutylene terephthalate resin composition which contains a polyethylene terephthalate resin (B) containing a prescribed modifying component.

The modified polyethylene terephthalate resin (B) used in the present invention is a polyester resin obtained

by polycondensing:

1) terephthalic acid or an ester-forming derivative thereof ($C_{1-6}$ alkyl ester, acid halide, etc.),
2) ethylene glycol or an ester-forming derivative thereof (acetylated compound, etc.), and
3) a modifying component which is dicarboxylic acid other than terephthalic acid, an ester-forming derivative thereof ($C_{1-6}$ alkyl ester, acid halide, etc.), glycol other than ethylene glycol, or an ester-forming derivative thereof (acetylated compound, etc.)

in accordance with a known method.

Examples of dicarboxylic acid other than terephthalic acid, or an ester-forming derivative thereof ($C_{1-6}$ alkyl ester, acid halide, etc.) include those exemplified for the component (A). In the present invention, isophthalic acid is preferably used as the modifying component.

Examples of glycol other than ethylene glycol, or an ester-forming derivative thereof (acetylated compound, etc.) include a $C_{2-10}$ alkylene glycol such as propylene glycol, trimethylene glycol, 1,4-butanediol, 1,3-butylene glycol, hexamethylene glycol, neopentyl glycol, or 1,3-octanediol; a polyoxyalkylene glycol such as diethylene glycol, triethylene glycol, or dipropylene glycol; an alicyclic diol such as cyclohexanedimethanol or hydrogenated bisphenol A; an aromatic diol such as bisphenol A or 4,4'-dihydroxybiphenyl; a $C_{2-4}$ alkylene oxide adduct of bisphenol A, such as a 2 mol ethylene oxide adduct of bisphenol A, or a 3 mol propylene oxide adduct of bisphenol A; or an ester-forming derivative of these glycols (acetylated compound, etc.). These glycol components can be used alone, or two or more of them can be used in combination.

The modifying component in the production of the modified polyethylene terephthalate resin (B) used in the present invention may contain a hydroxycarboxylic acid component, a lactone component, and the like, as long as the objects of the present invention are not impaired. The amount of a repeating unit derived from these components in the total repeating units in the polyethylene terephthalate resin (B) is preferably 5 mol% or more and 30 mol% or less, more preferably 7 mol% or more and 20 mol% or less, and particularly preferably 10 mol% or more and 15 mol% or less.

Examples of the hydroxycarboxylic acid component contained in the modifying component include an aromatic hydroxycarboxylic acid such as 4-hydroxybenzoic acid, 3-hydroxybenzoic acid, 6-hydroxy-2-naphthoic acid, or 4-carboxy-4'-hydroxybiphenyl; an aliphatic hydroxycarboxylic acid such as glycolic acid or hydroxycaproic acid; or an ester-forming derivative of these hydroxycarboxylic acids ($C_{1-6}$ alkyl ester derivative, acid halide, acetylated compound, etc.). These hydroxycarboxylic acid components can be used alone, or two or more of them can be used in combination.

Examples of the lactone component contained in the modifying component include a $C_{3-12}$ lactone such as propiolactone, butyrolactone, valerolactone, or caprolactone (ε-caprolactone, etc.). These lactone components can be used alone, or two or more of them can be used in combination.

From the viewpoint of fluidity of the polybutylene terephthalate resin composition, the modified polyethylene terephthalate resin (B) preferably has a melting point of 245°C or lower, and particularly preferably 240°C or lower. The melting point of the modified polyethylene terephthalate resin (B) can be measured in accordance with JIS K7121 using a differential scanning calorimeter (DSC).

Regarding the modified polyethylene terephthalate resin (B) in the polybutylene terephthalate resin composition used in the present invention, in case the total amount of the polybutylene terephthalate resin (A) and the modified polyethylene terephthalate resin (B) is 100% by mass, it is preferable that the amount of the polybutylene terephthalate resin (A) is more than 50% by mass and 70% by mass or less, and the amount of the modified polyethylene terephthalate resin (B) is 30% by mass or more and less than 50% by mass. It is more preferable that the amount of the polybutylene terephthalate resin (A) is 55% by mass or more 65% by mass or less, and the amount of the modified polyethylene terephthalate resin (B) is 35% by mass or more and 45% by mass or less. In case the total amount of the polybutylene terephthalate resin (A) and the modified polyethylene terephthalate resin (B) is 100% by mass, if the amount of the polybutylene terephthalate resin (A) is 50% by mass or less, moldability of the polybutylene terephthalate resin composition may deteriorate. In case the total amount of the polybutylene terephthalate resin (A) and the modified polyethylene terephthalate resin (B) is 100% by mass, if the amount of the polybutylene terephthalate resin (A) is more than 70% by mass, the obtained molded article may exhibit undesirable appearance, warpage, and flame retardance.

The amount of the modified polyethylene terephthalate resin (B) for use in the polybutylene terephthalate resin composition used in the present invention is preferably 30 parts by mass or more and less than 100 parts by mass, and more preferably 40 parts by mass or more and less than 100 parts by mass, based on 100 parts by mass of the polybutylene terephthalate resin (A). When the amount of the modified polyethylene terephthalate resin (B) is less than 30 parts by mass based on 100 parts by mass of the polybutylene terephthalate resin (A), the obtained casing for electronic equipment may exhibit undesirable appearance, warpage, and flame retardance. When the amount of the modified polyethylene terephthalate resin (B) is 100 parts by mass or more based on 100 parts by mass of the polybutylene terephthalate resin (A), moldability of the obtained polybutylene terephthalate resin composition may deteriorate.

[Halogen-Free Flame Retardant (C)]

Examples of the halogen-free flame retardant (C) used in the present invention include, but are not limited to, a phosphorous-based flame retardant, an antimony-based flame retardant, and a nitrogen-based flame retardant.

The phosphorous-based flame retardant is not particularly limited, as long as it is a compound having a phosphorus atom, and examples thereof include an organic phosphorous-based flame retardant and an inorganic phosphorous-based flame retardant. Examples of the organic phosphorous-based flame retardant include a phosphoric acid ester (aromatic phosphoric acid ester such as triphenyl phosphate), a phosphoric acid ester amide, a phosphonitrile compound ((poly)phenoxyphosphazene, etc.), an organic phosphonic acid compound (phosphonic acid ester such as diphenyl methanephosphate or diethyl phenylphosphonate), an organic phosphinic acid compound (methyl phosphinate, etc.), and phosphine oxide (triphenyl phosphine oxide, tricresyl phosphine oxide, etc.).

Examples of the inorganic phosphorous-based flame retardant include a non-fused or fused (phosphorous) phosphoric acid salt (metal salt such as a calcium salt), such as red phosphorus, orthophosphoric acid, phosphorous acid, hypophosphoric acid, polyphosphoric acid (metaphosphoric acid, pyrophosphoric acid, triphosphoric acid, tetraphosphoric acid, etc.), or polyphosphorous acid (metaphosphorous acid, pyrophosphorous acid, etc.).

Examples of the antimony-based flame retardant include antimony trioxide, antimony pentoxide, sodium antimonite, and the like. Examples of the nitrogen-based flame retardant include a salt of a triazine-based compound with cyanuric acid or isocyanuric acid, and a double salt of a nitrogen compound having an amino group with polyphosphoric acid.

Of the above flame retardants, the organic phosphorous-based flame retardant is preferably used in view of the fact that a toxic gas is not generated and high flame retardant effect is exerted. The above flame retardants can be used alone, or two or more of them can be used in combination.

The halogen-free flame retardant (C) in the polybutylene terephthalate resin composition used in the present invention is preferably used so that the value of the below-mentioned formula (I) represented by parts by mass of the modified polyethylene terephthalate resin (B), the halogen-free flame retardant (C), and the epoxy group-containing ethylene copolymer (D) described below based on 100 parts by mass of the polybutylene terephthalate resin (A) is within a range of 2/8 or more and 3/7 or less.

$$(C)/((A)+(B)+(D)) \quad \cdots (I)$$

When the amount of the halogen-free flame retardant (C) used is adjusted within the above range, it is possible to satisfy both flame retardance and impact resistance of the obtained casing for electronic equipment, preferably. When the value of the formula (I), which represents the use amount of the halogen-free flame retardant (C), is less than 2/8, it may be impossible to impart sufficient flame retardance to the obtained casing for electronic equipment. When the value of the formula (I) exceeds 3/7, the obtained casing for electronic equipment may be insufficient in impact resistance.

The amount of the halogen-free flame retardant (C) for use in the present invention used in the polybutylene terephthalate resin composition is preferably 40 parts by mass or more and 100 parts by mass or less, and more preferably 50 parts by mass or more and 65 parts by mass or less, based on 100 parts by mass of the polybutylene terephthalate resin (A). When the above amount of the halogen-free flame retardant (C) is contained in the casing for electronic equipment of the present invention, the casing for electronic equipment can be preferably flame-retarded.

Since the casing for electronic equipment of the present invention is flame-retarded by the halogen-free flame retardant, a toxic substance is less likely to be produced and thus it is preferable from an environmental aspect.

[Epoxy Group-Containing Ethylene Copolymer (D)]

The epoxy group-containing ethylene copolymer (D) used in the present invention includes an ethylene unit and an epoxy group-containing monomer unit as essential components, and also includes an ethylenic unsaturated ester compound unit as an optional component, and typical examples include a copolymer composed of 20 to 99.9% by mass of an ethylene unit, 0.1 to 30% by mass of an epoxy group-containing monomer unit, and 0 to 50% by mass of an ethylenic unsaturated ester compound unit. Examples of the epoxy group-containing monomer include an unsaturated carboxylic acid glycidyl ester unit or an unsaturated glycidyl ether unit.

Examples of the unsaturated carboxylic acid glycidyl ester or unsaturated glycidyl ether include a compound represented by the formula (IV):

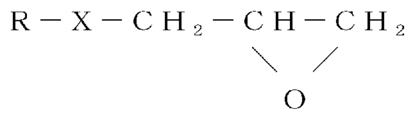 · · · (IV)

wherein R represents an alkenyl group having 2 to 18 carbon atoms, and X represents a carbonyloxy group, a methyleneoxy group, or a phenyleneoxy group. Specific examples of such unsaturated carboxylic acid glycidyl ester include glycidyl acrylate, glycidyl methacrylate, itaconic acid glycidyl ester, and the like. Examples of the unsaturated glycidyl ether include allyl glycidyl ether, meta-allyl glycidyl ether, styrene-p-glycidyl ether, and the like.

Examples of the ethylenic unsaturated ester compound include those other than the glycidyl ester, for example, a vinyl ester of a saturated carboxylic acid, such as vinyl acetate, vinyl propionate, or vinyl butyrate, or an alkyl ester of an unsaturated carboxylic acid, such as methyl acrylate, ethyl acrylate, butyl acrylate, methyl methacrylate, ethyl methacrylate, or butyl methacrylate. Of these, vinyl acetate, methyl acrylate, ethyl acrylate, methyl methacrylate, and the like are preferable. The amount of the ethylenic unsaturated ester compound unit in the epoxy group-containing ethylene copolymer (D) is usually within a range of 0 to 50% by weight, and is preferably within a range of about 3 to 50% by weight when the ester compound unit exists.

The epoxy group-containing ethylene copolymer (D) in the present invention may be any of a block copolymer, a graft copolymer, a random copolymer, and an alternating copolymer and may be, for example, either a copolymer in which an epoxy group-containing monomer is grafted onto a propylene-ethylene block copolymer, or a copolymer in which an ethylenic unsaturated ester compound is grafted onto an ethylene-epoxy group-containing monomer copolymer.

The epoxy group-containing ethylene copolymer (D) in the present invention can be produced by copolymerizing a monomer to be provided for a known method, for example, copolymerization in the presence of a radical generator under the conditions of about 500 to 4,000 atmospheric pressure and about 100 to 300°C, in the presence or absence of an appropriate solvent and a chain transfer agent. It is also possible to produce the epoxy group-containing ethylene copolymer (D) in the present invention by a method in which polyethylene is mixed with an epoxy group-containing monomer and optionally mixed with an ethylenic unsaturated ester compound, a radical generator, and the like, and then the mixture is subjected to melt grafting copolymerization in an extruder.

The epoxy group-containing ethylene copolymer (D) can also be used in the form of a mixture of the epoxy group-containing ethylene copolymer (D) and a rubber component. Examples of such rubber component include an ethylene-based rubber, for example, a rubber composed of an ethylene unit-α-olefin (having 3 or more carbon atoms) unit such as an ethylene-propylene rubber, an ethylene-butene rubber, or an ethylene-butadiene rubber, or a rubber composed of an ethylene unit-α-olefin (having 3 or more carbon atoms) unit-nonconjugated diene unit such as an ethylene-propylene-nonconjugated diene rubber; a styrene-based rubber such as a styrene-butadiene rubber, a SBS rubber, or a hydrogenated SBS rubber; a polyisobutylene rubber, a butyl rubber, a butadiene rubber, an isoprene rubber, an Alfie rubber, a nitrile rubber, a fluorine rubber, a vinyl pyridine rubber, a silicone rubber, a butadiene-methyl methacrylate rubber, an acrylic rubber, a urethane rubber, an epichlorohydrin rubber, a chlorobutyl rubber, a bromobutyl rubber, and a mixture of two or more of these rubbers. It is also possible to use these rubber components modified with a modifying agent such as maleic anhydride, a halogenated compound, a vinyl compound, or an acrylic compound, as long as an adverse influence is not exerted as a result of the excessive reaction with the epoxy group-containing ethylene copolymer.

A mixture of an epoxy group-containing ethylene copolymer with a rubber component can be obtained by a known method. The mixture can be produced, for example, by dry-blending an epoxy group-containing ethylene copolymer with a rubber component, followed by melt-kneading using a single or twin screw extruder, a Banbury mixer, a roll, various kneaders, or the like.

The epoxy group-containing ethylene copolymer (D) in the polybutylene terephthalate resin composition used in the present invention is preferably used so that the value of the below-mentioned formula (II) represented by parts by mass of the modified polyethylene terephthalate resin (B) and the epoxy group-containing ethylene copolymer (D) based on 100 parts by mass of the polybutylene terephthalate resin (A) is within a range of 1/9 or more and 3/7 or less.

$$(D)/((A)+(B)) \quad \cdots (II)$$

When the amount of the epoxy group-containing ethylene copolymer (D) used is adjusted within the above range, it is possible to satisfy both flame retardance and impact resistance of the obtained casing for electronic equipment, preferably. When the value of the formula (II), which represents the use amount of the epoxy group-containing ethylene copolymer (D), is less than 1/9, it may be impossible to impart sufficient impact resistance to the obtained casing for electronic equipment. When the value of the formula (II) exceeds 3/7, the obtained casing for electronic equipment may

be insufficient in flame retardance.

The content of the epoxy group-containing ethylene copolymer (D) in the polybutylene terephthalate resin composition used in the present invention is preferably 30 parts by mass or more and 100 parts by mass or less, and more preferably 40 parts by mass or more and 70 parts by mass or less, based on 100 parts by mass of the polybutylene terephthalate resin (A), since impact resistance of the obtained molded article can be satisfactorily improved to obtain a molded article having excellent mechanical properties.

Furthermore, the polybutylene terephthalate resin (A), the modified polyethylene terephthalate resin (B), the halogen-free flame retardant (C), and the epoxy group-containing ethylene copolymer (D) in the polybutylene terephthalate resin composition are preferably used so that the value of the below-mentioned formula (III) represented by parts by mass of the respective components based on 100 parts by mass of the polybutylene terephthalate resin (A) is preferably within a range of 0.8 or more and 1.0 or less.

$$(((A) + (B) + (D))/(C)) \times ((D)/((A) + (B))) \quad \cdots (III)$$

When the amounts of the respective components used are adjusted within the above range, it is possible to satisfy both flame retardance and impact resistance of the obtained casing for electronic equipment, preferably. When the value of the formula (III), which represents the use amounts of the respective components, is less than 0.8, it may be impossible to impart sufficient impact resistance to the obtained casing for electronic equipment. When the value of the formula (III) exceeds 1.0, the obtained casing for electronic equipment may be insufficient in flame retardance.

[Inorganic Filler]

It is preferable that the polybutylene terephthalate resin composition used in the present invention contains, in addition to essential components, an inorganic filler. Any of a fibrous filler, a particulate filler, and a platy filler may be used, and two or more fillers may be used in combination as the inorganic filler.

A fibrous filler is preferably used in the present invention. This is because use of the fibrous filler exerts the reinforcing effect to the molded article, thus enabling an improvement in mechanical properties of the molded article. As the fibrous filler, a glass fiber is particularly preferable. Known glass fibers are preferably used as the glass fiber, and there is no particular limitation on diameter of the glass fiber, shape such as cylindrical shape, cocoon-shaped cross section, or elliptic cross section, or length or glass cutting method used in the production of a chopped strand, roving, or the like. In the present invention, there is also no limitation on type of glass, and E glass and a corrosion-resistant glass with the composition containing a zirconium element are preferably used in view of quality. The fiber length and the fiber diameter of the glass fiber may be within a usual range. For example, it is possible to use a glass fiber having a fiber length of 2.0 mm or more and 6.0 mm or less, and a fiber diameter of 9.0 $\mu$m or more and 14.0 $\mu$m or less.

The content of the fibrous filler in the polybutylene terephthalate resin composition is not particularly limited, and is preferably within a range of 100 parts by mass or more and 200 parts by mass or less, and more preferably 100 parts by mass or more and 150 parts by mass or less, based on 100 parts by mass of the polybutylene terephthalate resin.

In the present invention, a fibrous filler is preferably used in combination with a platy filler. This combination use enables remarkable reduction in warpage while imparting impact resistance to the molded article. Use of a glass fiber in combination with a glass flake is particularly preferabe.

When using a fibrous filler in combination with a platy filler, the total amount of the fibrous filler and the platy filler is preferably 100 parts by mass or more and 200 parts by mass or less based on 100 parts by mass of the polybutylene terephthalate resin. A ratio of the fibrous filler to the platy filler can be appropriately selected, as long as the objects of the present invention are not impaired.

[Flame-Retardant Auxiliaries]

The polybutylene terephthalate resin composition used in the present invention preferably contains, in addition to the above essential components, a flame-retardant auxiliary. Satisfactory flame retardant effect can be obtained by using a flame retardant in combination with a flame-retardant auxiliary. Type of the flame-retardant auxiliary is not limited, as long as the objects of the present invention are not impaired, and a suitable flame-retardant auxiliary can be selected and used according to type of the halogen-free flame retardant (C).

When the organic phosphorous-based flame retardant is used as the halogen-free flame retardant (C) used in the present invention, a nitrogen-containing flame-retardant auxiliary is preferably used as the flame-retardant auxiliary. As the flame-retardant auxiliary, melamine cyanurate is used particularly preferably.

The content of the flame-retardant auxiliary in the polybutylene terephthalate resin composition is not particularly

limited, and is preferably within a range of 20 parts by mass or more and 40 parts by mass or less, and more preferably 25 parts by mass or more and 35 parts by mass or less, based on 100 parts by mass of the polybutylene terephthalate resin.

[Other Components]

The polybutylene terephthalate resin composition used in the present invention may further contain other components, as long as the effects of the present invention are not impaired. Examples of other components include additives such as a nucleating agent, a pigment, an antioxidant, a stabilizer, a plasticizer, a lubricant, a mold releasant, and a dripping inhibitor, and other resins.

The content of other components in the polybutylene terephthalate resin composition is not particularly limited, and is preferably 30 parts by mass or less, and more preferably 20 parts by mass or less, in terms of the total amount, based on 100 parts by mass of the polybutylene terephthalate resin (A).

[Method for Producing Polybutylene Terephthalate Resin Composition]

There is no particular limitation on a specific aspect of the method for preparing a polybutylene terephthalate resin composition. A resin composition can be prepared, for example, by a usually known facility and method as a method for preparing a resin composition or a molded article thereof. Specifically, requisite components are mixed and kneaded using a single or twin screw extruder or other melt kneader, thus making it possible to prepare pellets for molding. A plurality of extruders or other melt kneaders may be used. All components may be simultaneously introduced from a hopper, and the components may be partially introduced from a side feed port.

Casing for Electronic Equipment

The casing for electronic equipment of the present invention is composed of the above-mentioned polybutylene terephthalate resin composition. The phrase "the casing for electronic equipment of the present invention is composed of the above-mentioned polybutylene terephthalate resin composition" means that the casing for electronic equipment of the present invention is obtained by molding the resin composition, and constituent components of the casing for electronic equipment is partially or entirely derived from the above-mentioned polybutylene terephthalate resin composition.

The casing for electronic equipment of the present invention can be produced, for example, by molding the polybutylene terephthalate resin composition using a conventional molding machine. Such molding machine is not particularly limited, as long as it can be usually used for molding a casing for electronic equipment, and an injection molding machine, a compression molding machine, and the like can be used. In view of excellent ease of disposing metal components in a mold, simplicity of an apparatus, and productivity, an injection molding machine is preferably used.

The electronic equipment, to which the casing for electronic equipment of the present invention is applied, is not particularly limited, and is preferably any electronic equipment of the group consisting of office automation equipment, electrical home appliances, or electric vehicles. Since the casing for electronic equipment of the present invention is provided with flame retardance and impact resistance, the casing can be preferably used as a casing for accommodating components of such electronic equipment. The casing for electronic equipment of the present invention is provided with both impact resistance and flame retardance, and is also provided with excellent low warpage. Therefore, it is also suited for bonding with components to be accommodated inside, or bonding of a case with a lid, and can be preferably applied for electronic equipment for which safety and satisfactory low warpage are required.

[Properties of Polybutylene Terephthalate Resin Composition and Casing for Electronic Equipment]

The polybutylene terephthalate resin composition used in the present invention imparts excellent impact resistance, flame retardance, and low warpage to a molded article.

Specifically, since the polybutylene terephthalate resin composition used in the present invention exhibits the Charpy impact value as measured in accordance with ISO-179 of 10 $kJ/m^2$ or more, the casing for electronic equipment of the present invention composed of the polybutylene terephthalate resin composition is excellent in impact resistance. Since the polybutylene terephthalate resin composition used in the present invention complies with 5VA standard at a thickness of 2 mm in a test method in accordance with the UL 94 standard, the casing for electronic equipment of the present invention composed of the polybutylene terephthalate resin composition is excellent in flame retardance. The casing for electronic equipment of the present invention is excellent in processability such as bonding with components to be accommodated inside, or bonding of a case with a lid since warpage is suppressed.

Since the casing for electronic equipment of the present invention has satisfactory comparative tracking index, it is also provided with safety required for an electronic equipment (particularly, power supply components).

EXAMPLES

The present invention will be described in more detail below by way of Examples, but the present invention is not limited to the following Examples.

Materials

Details of the respective components used in Examples and Comparative Example are as follows.

Polybutylene terephthalate (PBT): Polybutylene terephthalate with IV = 0.8, "DURANEX" (registered trademark) manufactured by WinTech Polymer Ltd.
Modified polyethylene terephthalate (modified PET): 12.5 mol% Isophthalic acid-modified polyethylene terephthalate, manufactured by Teijin Fibers Limited
Polyethylene terephthalate (unmodified PET): manufactured by Teijin Fibers Limited. under the product name of TRF
Modified polybutylene terephthalate (modified PBT): 25 mol% Isophthalic acid modified polybutylene terephthalate, manufactured by WinTech Polymer Ltd.
Flame retardant: Organic phosphate, manufactured by Clariant (Japan) K.K. under the product name of Exolit OP1240
Flame-retardant auxiliary: Melamine cyanurate, manufactured by BASF Japan Ltd. under the product name of MELAPUR MC50
Stabilizer: Sodium dihydrogen phosphate, manufactured by YONEYAMA CHEMICAL INDUSTRY CO., LTD. under the product name of Sodium phosphate monobasic
Dripping inhibitor: PTFE, manufactured by Mitsubishi Rayon Co., Ltd. under the product name of Metablen A3800
Glass fiber: E glass chopped strand, manufactured by Nippon Electric Glass Company, Limited under the product name of ECS 03 T-187
Elastomer 1: Epoxy group-containing ethylene copolymer, manufactured by Sumitomo Chemical Company, Limited under the product name of BONDFAST 7L
Elastomer 2: Polyester type polyester elastomer, manufactured by TOYOBO CO., LTD. under the product name of Perplene S2001, hardness of 55
Elastomer 3: Polyether type polyester elastomer, manufactured by DU PONT-TORAY CO., LTD. under the product name of Hytrel 5557, hardness of 55
Elastomer 4: Core shell, manufactured by Rohm & Haas Japan K.K. under the product name of Paraloid EXL2314
Elastomer 5: MBS resin, manufactured by Rohm & Haas Japan K.K. under the product name of Paraloid EXL2602
Elastomer 6: Olefin, manufactured by Mitsui Chemicals, Inc. under the product name of N TAFMER MP0620
"BONDFAST 7L" is a copolymer of ethylene, glycidyl methacrylate, and methyl acrylate.
"Perplene S" is a block copolymer including polybutylene terephthalate as a hard segment and a soft polyester as a soft segment.
"Hytrel" is a block copolymer including polybutylene terephthalate as a hard segment and polyether as a soft segment.
"Paraloid EXL2314" is a copolymer of an alkyl acrylate and an alkyl methacrylate.
"Paraloid EXL2602" is a copolymer of butadiene, an alkyl acrylate, and an alkyl methacrylate.
"N TAFMER MP0620" is a maleic anhydride-modified polyolefin.
"Hardness" means Durometer hardness (D scale) defined in JIS K7215.

Examples and Comparative Examples

Raw materials shown in Tables 1 and 2 were supplied in a twin screw extruder (TEX-30$\alpha$, manufactured by The Japan Steel Works, Ltd.), followed by melt-kneading to produce a pellet-shaped polybutylene terephthalate resin composition. Melt-kneading conditions are as follows. Units of numerals indicating the amount of each component in Tables 1 and 2 are parts by mass.

(Melt-Kneading Conditions)

Cylinder temperature: 260°C
Screw speed: 170 rpm
Ejection amount: 20 kg/hour

(Molding Conditions of Specimens for Evaluation)

The obtained pellet-shaped resin composition was dried at 140°C for 3 hours, and specimens were injection-molded under the following conditions.

Molding machine: ROBOSHOT S2000i100B, manufactured by FANUC Corporation
Cylinder temperature: 260°C
Mold temperature: 80°C (water temperature control)
Injection speed: 17 mm/second
Dwelling: 60 MPa × 20 seconds

With respect to the obtained specimens for evaluation, various properties were evaluated under the following conditions. The results are shown in Tables 1 and 2.

(Tensile Test)

In accordance with evaluation criteria defined in ISO527-1,2, tensile strength and tensile elongation of specimens for evaluation were evaluated.

(Flexural Test)

In accordance with ISO178, flexural strength and flexural elastic modulus of specimens for evaluation were evaluated.

(Charpy Impact Value)

In accordance with evaluation criteria defined in ISO-179 (specimens of 4 mm in thickness), the Charpy impact value of specimens for evaluation was evaluated.

(Melt Viscosity)

In accordance with ISO11443, the melt viscosity of the resin used in specimens for evaluation was measured.

(Flame Retardance)

With respect to specimens for evaluation (0.8 mm in thickness, 2 mm in thickness), UL 94 standard vertical flame test of UNDERWRITERS LABORATORIES INC. was carried out. Judgment results for UL94 V-0, V-1, and V-2 standards with respect to each specimen are shown in "UL94 flame retardance" in Tables 1 and 2. Judgment results illustrating whether or not each specimen complies with 5VA of UL94 5VA and 5VB standard are shown in "5VA flame retardance" in Tables 1 and 2.

(Warpage)

Flatness of plate-shaped specimens, each measuring 120 mm in length, 120 mm in width, and 2 mm in thickness, was measured. Flatness of specimen was measured (9 points on the specimen shown in Fig. 1) using a CNC image analyzer (product name; QVBHU404-PRO1F, manufactured by Mitutoyo Corporation).
Evaluation criteria are as follows.

2 mm or less: A
2 to 5 mm: B
5 to 8 mm: C
8 mm or more: D

(Comparative Tracking Index (CTI))

In accordance with IEC112, 3rd Version, a comparative tracking index (CTI) of specimens for evaluation was measured using an aqueous 0.1% ammonium chloride solution and platinum electrodes. Based on the following evaluation criteria, the comparative tracking index was rated.

250 to 400 V: 2
400 to 600 V: 1
More than 600 V: 0

[Table 1]

| | | Example | | Comparative Example | | | | | | |
|---|---|---|---|---|---|---|---|---|---|---|
| | | 1 | 2 | 1 | 2 | 3 | 4 | 5 | 6 | 7 |
| PBT | | 100 | 100 | 100 | 100 | 100 | 100 | 100 | 100 | 100 |
| Modified PET | | 68.2 | 68.2 | - | 67.9 | 68.2 | 68.2 | 68.2 | 68.3 | 68.3 |
| Unmodified PET | | - | - | - | - | - | - | - | - | - |
| Modified PBT | | - | - | - | - | - | - | - | - | - |
| Phosphorus-based flame retardant | | 55.7 | 61.8 | 32.5 | 49.2 | 49.9 | 75.5 | 54.9 | 70.9 | 78.4 |
| Flame retardant auxiliary | | 27.8 | 30.9 | 16.2 | 24.7 | 24.9 | 37.7 | 27.4 | 35.4 | 39.2 |
| Stabilizer | | 0.9 | 0.9 | 0.4 | 0.8 | 0.8 | 0.9 | 0.8 | 1.0 | 1.1 |
| Dripping inhibitor | | 0.9 | 0.9 | 0.4 | 0.8 | 0.8 | 0.9 | 0.8 | 1.0 | 1.1 |
| Glass fiber | | 128.5 | 132.5 | 64.9 | 105.5 | 124.7 | 141.5 | 117.6 | 151.9 | 224.0 |
| Elastomer 1 | | 42.6 | 42.5 | - | - | 42.6 | 42.6 | 18.6 | 73.2 | 42.8 |
| Elastomer 2 | | - | - | - | - | - | - | - | - | - |
| Elastomer 3 | | - | - | - | - | - | - | - | - | - |
| Elastomer 4 | | - | - | - | - | - | - | - | - | - |
| Elastomer 5 | | - | - | - | - | - | - | - | - | - |
| Elastomer 6 | | - | - | - | - | - | - | - | - | - |
| Tensile strength (MPa) | | 85 | 83 | 91 | 90 | 87 | 73 | 97 | 75 | 98 |
| Tensile elongation (%) | | 2.8 | 2.7 | 1.3 | 2.2 | 2.9 | 2.4 | 2.2 | 3.3 | 2.3 |
| Flexural strength (MPa) | | 139 | 133 | 160 | 142 | 145 | 118 | 158 | 123 | 157 |
| Flexural modulus (MPa) | | 8610 | 8400 | 11200 | 9760 | 8990 | 8000 | 9300 | 7820 | 9330 |
| Sharpy impact value (kJ /$m^2$) | | 10.4 | 10.2 | 5.5 | 6.0 | 10.6 | 7.2 | 8.1 | 12.0 | 7.8 |
| Melt viscosity (kPa·s) | | 0.50 | 0.52 | 0.35 | 0.33 | 0.48 | 0.63 | 0.38 | 0.70 | 0.65 |
| UL94 flame retardancy | 0.8mm | V-1 | V-0 | V-0 | V-0 | V-1 | V-0 | V-0 | V-2 | V-0 |
| | 2mm | V-0 | V-0 | V-0 | V-0 | V-2 | V-0 | V-0 | V-2 | V-0 |
| 5VA flame retardancy | | Compliable | Compliable | Compliable | Compliable | - | Compliable | Compliable | - | Compliable |

(continued)

| | Example | | Comparative Example | | | | | | |
|---|---|---|---|---|---|---|---|---|---|
| | 1 | 2 | 1 | 2 | 3 | 4 | 5 | 6 | 7 |
| Warpage | B | B | D | B | B | B | B | B | B |
| CTI rank | 1 | 1 | 0 | 1 | 1 | 0 | 1 | 1 | 0 |

[Table 2]

| | Comparative Example | | | | | | | | | |
|---|---|---|---|---|---|---|---|---|---|---|
| | 8 | 9 | 10 | 11 | 12 | 13 | 14 | 15 | 16 | 17 |
| PBT | 100 | 100 | 100 | 100 | 100 | 100 | 100 | 100 | 100 | 100 |
| Modified PET | 42.8 | 100.0 | - | - | 68.2 | 68.2 | 68.4 | 68.2 | 68.2 | 68.2 |
| Unmodified PET | - | - | 68.2 | - | - | - | - | - | - | - |
| Modified PBT | - | - | - | 68.2 | - | - | - | - | - | - |
| Phosphorus-based flame retardant | 52.5 | 73.5 | 61.8 | 61.8 | 61.8 | 61.8 | 1 3.6 | 61.8 | 61.8 | 61.8 |
| Flame retardant auxiliary | 26.3 | 36.8 | 30.9 | 30.9 | 30.9 | 30.9 | 57.0 | 30.9 | 30.9 | 30.9 |
| Stabilizer | 0.8 | 1.1 | 0.9 | 0.9 | 0.9 | 0.9 | 1.4 | 0.9 | 0.9 | 0.9 |
| Dripping inhibitor | 0.8 | 1.1 | 0.9 | 0.9 | 0.9 | 0.9 | 1.4 | 0.9 | 0.9 | 0.9 |
| Glass fiber | 112.5 | 157.6 | 132.5 | 132.5 | 132.5 | 132.5 | 195.0 | 132.5 | 132.5 | 132.5 |
| Elastomer 1 | 36.1 | 50.5 | 42.5 | 42.5 | - | - | - | - | - | - |
| Elastomer 2 | - | - | - | - | 42.5 | - | - | - | - | - |
| Elastomer 3 | - | - | - | - | - | 42.5 | 113.8 | - | - | - |
| Elastomer 4 | - | - | - | - | - | - | - | 42.5 | - | - |
| Elastomer 5 | - | - | - | - | - | - | - | - | 42.5 | |
| Elastomer 6 | - | - | - | - | - | - | - | - | - | 42.5 |

(continued)

| | | Comparative Example | | | | | | | | |
|---|---|---|---|---|---|---|---|---|---|---|
| | | 8 | 9 | 10 | 11 | 12 | 13 | 14 | 15 | 16 | 17 |
| Tensile strength (MPa) | | 82 | Impossible to mold (Mold release failure) | 84 | 85 | 97 | 90 | 69 | 69 | 78 | 41 |
| Tensile elongation (%) | | 2.5 | | 2.7 | 2.8 | 1.8 | 2.2 | 2.5 | 2.5 | 1.8 | 0.7 |
| Flexural strength (MPa) | | 131 | | 132 | 135 | 152 | 142 | 110 | 110 | - | - |
| Flexural modulus (MPa) | | 8430 | | 8380 | 8320 | 10460 | 9760 | 6760 | 6760 | - | - |
| Sharpy impact value (kJ/m$^2$) | | 10.1 | | 10.1 | 10.1 | 6.6 | 7.2 | 7.8 | 6.4 | 6.6 | 3.1 |
| Melt viscosity (kPa·s) | | 0.58 | | 0.67 | 0.51 | - | 0.33 | 0.36 | 0.36 | - | - |
| UL94 flame retardancy | 0.8mm | V-2 | | V-0 | V-2 | V-0 | V-0 | V-1 | V-1 | V-1 | V-1 |
| | 2mm | V-1 | | V-0 | V-2 | V-0 | V-0 | V-2 | V-2 | V-2 | V-2 |
| 5VA flame retardancy | | - | | Compliable | - | Compliable | Compliable | - | - | - | - |
| Warpage | | C | | C | B | B | B | B | B | - | - |
| CTI rank | | 1 | | 1 | 1 | 1 | 1 | 1 | 1 | 2 | 1 |

The results of Examples revealed that a molded article provided with impact resistance, tracking resistance, flame retardance, and suppressed warpage is obtained by mixing a polybutylene terephthalate resin (A) with a modified polyethylene terephthalate (B), a halogen-free flame retardant (C), and an epoxy group-containing ethylene copolymer (D).

## Claims

1. A casing for electronic equipment, composed of a polybutylene terephthalate resin composition comprising:

    a polybutylene terephthalate resin (A),
    a modified polyethylene terephthalate resin (B),
    a halogen-free flame retardant (C), and
    an epoxy group-containing ethylene copolymer (D),
    Wherein
    the Charpy impact value measured in accordance with ISO-179 in the polybutylene terephthalate resin composition is 10 kJ/$m^2$ or more, and
    the polybutylene terephthalate resin composition complies with 5VA standard at a thickness of 2 mm in a test method in accordance with the UL 94 standard.

2. The casing for electronic equipment according to claim 1, wherein, when the total amount of the polybutylene terephthalate resin (A) and the modified polyethylene terephthalate resin (B) is 100% by mass, the polybutylene terephthalate resin (A) satisfies the amount within a range of more than 50% by mass and less than 70% by mass, and the modified polyethylene terephthalate resin (B) satisfies the amount within a range of more than 30% by mass and less than 50% by mass.

3. The casing for electronic equipment according to claim 1 or 2, wherein the value of the below-mentioned formula (I) represented by parts by mass of the modified polyethylene terephthalate resin (B), the halogen-free flame retardant (C), and the epoxy group-containing ethylene copolymer (D) based on 100 parts by mass of the polybutylene terephthalate resin (A) is within a range of 2/8 or more and 3/7 or less.

$$(C)/((A)+(B)+(D)) \quad \cdots (I)$$

4. The casing for electronic equipment according to any one of claims 1 to 3, wherein the value of the below-mentioned formula (II) represented by parts by mass of the modified polyethylene terephthalate resin (B) and the epoxy group-containing ethylene copolymer (D) based on 100 parts by mass of the polybutylene terephthalate resin (A) is within a range of 1/9 or more and 3/7 or less.

$$(D)/((A)+(B)) \quad \cdots (II)$$

5. The casing for electronic equipment according to any one of claims 1 to 4, wherein the value of the below-mentioned formula (III) represented by parts by mass of the modified polyethylene terephthalate resin (B), the halogen-free flame retardant (C), and the epoxy group-containing ethylene copolymer (D) based on 100 parts by mass of the polybutylene terephthalate resin (A) is within a range of 0.8 or more and 1.0 or less.

$$(((A)+(B)+(D))/(C)) \times ((D)/((A)+(B))) \quad \cdots (III)$$

6. The casing for electronic equipment according to any one of claims 1 to 5, which is a casing accommodating components of any electronic equipment of the group consisting of office automation equipment, electrical home appliances, or electric vehicles.

7. The casing for electronic equipment according to claim 6, wherein components of the electronic equipment are power supply components.

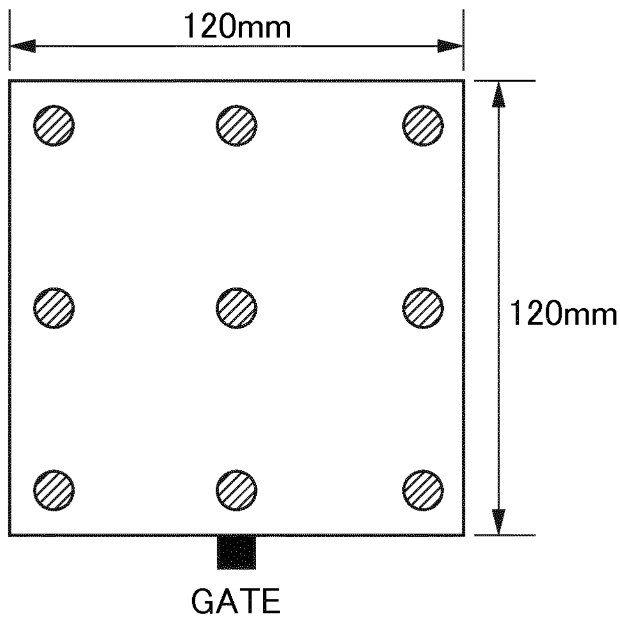


FIG. 1

## INTERNATIONAL SEARCH REPORT

International application No.
PCT/JP2013/070827

A. CLASSIFICATION OF SUBJECT MATTER
*C08L67/02*(2006.01)i, *C08K5/49*(2006.01)i, *C08L63/00*(2006.01)i

According to International Patent Classification (IPC) or to both national classification and IPC

B. FIELDS SEARCHED

Minimum documentation searched (classification system followed by classification symbols)
C08L67/00-67/08, C08K3/00-5/59, C08L63/00-63/10, C08L23/00-23/36, C08L51/00-51/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-178422 A (Toray Industries, Inc.), 27 June 2000 (27.06.2000), claims; paragraphs [0007], [0016], [0034] to [0035], [0053] (Family: none) | 1-7 |
| Y | JP 11-335534 A (Toray Industries, Inc.), 07 December 1999 (07.12.1999), claims; paragraphs [0009], [0017], [0033] to [0036] (Family: none) | 1-7 |
| Y | JP 2007-91865 A (Wintech Polymer Ltd.), 12 April 2007 (12.04.2007), claims; paragraphs [0008], [0019] to [0020]; examples & US 2009/0124733 A1 & WO 2007/037450 A1 | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>17 October, 2013 (17.10.13) | Date of mailing of the international search report<br>29 October, 2013 (29.10.13) |
| Name and mailing address of the ISA/<br>Japanese Patent Office<br>Facsimile No. | Authorized officer<br><br>Telephone No. |

Form PCT/ISA/210 (second sheet) (July 2009)

INTERNATIONAL SEARCH REPORT

International application No. PCT/JP2013/070827

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-227750 A (Toray Industries, Inc.), 08 October 2009 (08.10.2009), claims; paragraphs [0008], [0020], [0077], [0091] (Family: none) | 1-7 |
| Y | JP 2008-156392 A (Wintech Polymer Ltd.), 10 July 2008 (10.07.2008), claims; paragraphs [0008], [0053], [0059] to [0070], [0076] & US 2008/0167406 A1 & EP 1935944 A2 | 1-6 |
| A | WO 2011/155287 A1 (Wintech Polymer Ltd.), 15 December 2011 (15.12.2011), claims & CN 102933656 A & TW 201144381 A | 1-7 |
| A | JP 11-246744 A (Toray Industries, Inc.), 14 September 1999 (14.09.1999), claims (Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007091865 A